(19) **Europäisches Patentamt / European Patent Office / Office européen des brevets**

(11) **EP 4 095 190 B1**

(12) **EUROPEAN PATENT SPECIFICATION**

(45) Date of publication and mention
of the grant of the patent:
**24.07.2024 Bulletin 2024/30**

(21) Application number: **21880069.6**

(22) Date of filing: **11.10.2021**

(51) International Patent Classification (IPC):
*C08K 7/14* $^{(2006.01)}$     *C08L 69/00* $^{(2006.01)}$
*C08J 5/04* $^{(2006.01)}$     *C08J 5/08* $^{(2006.01)}$

(52) Cooperative Patent Classification (CPC):
(C-Sets available)
**C08J 5/043; C08J 5/08; C08K 7/14;** C08J 2369/00;
C08K 2201/003; C08K 2201/004        (Cont.)

(86) International application number:
**PCT/JP2021/037631**

(87) International publication number:
**WO 2022/080330 (21.04.2022 Gazette 2022/16)**

(54) **GLASS-FIBER-REINFORCED RESIN PLATE**

GLASFASERVERSTÄRKTE HARZPLATTE

PLAQUE DE RÉSINE RENFORCÉE PAR DES FIBRES DE VERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2020 JP 2020173824**

(43) Date of publication of application:
**30.11.2022 Bulletin 2022/48**

(73) Proprietor: **Nitto Boseki Co., Ltd.**
**Fukushima-shi**
**Fukushima 960-8161 (JP)**

(72) Inventors:
• **NUKUI Yosuke**
**Fukushima-shi, Fukushima 960-8161 (JP)**
• **SASAMOTO Taiki**
**Fukushima-shi, Fukushima 960-8161 (JP)**

(74) Representative: **Schön, Christoph**
**Dr. Schön, Neymeyr & Partner mbB**
**Bavariaring 26**
**80336 München (DE)**

(56) References cited:
**EP-A1- 4 029 841**     **EP-A1- 4 119 610**
**WO-A1-2017/171102**     **WO-A1-2020/137004**
**WO-A1-2022/054660**     **JP-A- 2011 016 901**
**JP-A- 2014 040 556**     **JP-A- 2015 074 674**
**JP-A- 2017 031 414**     **JP-A- 2017 052 925**
**JP-A- 2019 516 853**     **US-A1- 2019 203 041**

• **DATABASE WPI Week 2021030, Derwent World
Patents Index; AN 2021-26854D, XP002809725**

(52) Cooperative Patent Classification (CPC): (Cont.)

C-Sets
**C08K 7/14, C08L 69/00**

**Description**

Technical Field

The present invention relates to a glass-fiber-reinforced resin plate.

Background Art

Conventionally, in association with reduction in weight and size of portable electronic devices and the like, glass fiber-reinforced resin molded articles for use as members in portable electronic devices also have been required to have reduced weight and size and have high dimensional stability. In relation with high dimensional stability in the glass fiber-reinforced resin molded article, use of glass fiber having a flat cross-sectional shape is known to reduce the dimensional anisotropy of glass fiber-reinforced polycarbonate (see, e.g., Patent Literature 1 and 2).

Citation List

Patent Literature

Patent Literature 1: Japanese Patent Laid-Open No. 2014-040555
Patent Literature 2: WO2020137004 A1

Summary of Invention

Technical Problem

Even in the case of using glass fiber having a flat cross-sectional shape, however, when the thickness is 0.5 mm or less, the dimensional stability of the glass-fiber-reinforced resin plate may disadvantageously deteriorate. In an attempt to improve the dimensional stability of the glass-fiber-reinforced resin plate, the strength, surface smoothness, or productivity of the glass-fiber-reinforced resin plate may disadvantageously decrease.

An object of the present invention is to provide a glass-fiber-reinforced resin plate excellent in dimensional stability, strength, surface smoothness, and productivity even if having a thickness of 0.5 mm or less by eliminating these disadvantages.

Solution to Problem

In order to achieve the object, a glass-fiber-reinforced resin plate of the present invention comprises glass fiber having a flat cross-sectional shape and having a minor axis Ds in the range of 4.5 to 12.0 $\mu$m and a major axis $D_L$ in the range of 20.0 to 50.0 $\mu$m, and an amorphous thermoplastic resin, and has a thickness of 0.5 mm or less, the number average fiber length L of the glass fiber being in the range of 50 to 400 $\mu$m, the glass fiber content C being in the range of 25.0 to 55.0% by mass, the Ds, $D_L$, L, and C satisfying the following formula (1):

$$0.32 \leq 1000 \times D_S \times D_L^3 \times (C/100)^4/L^3 \leq 1.22 \,...(1).$$

The glass-fiber-reinforced resin plate of the present invention, which comprises glass fiber having a flat cross-sectional shape and an amorphous thermoplastic resin and has a thickness of 0.5 mm or less, can achieve excellent dimensional stability, strength, surface smoothness, and productivity when the glass fiber has a minor axis Ds in the range of 4.5 to 12.0 $\mu$m, a major axis $D_L$ in the range of 20.0 to 50.0 $\mu$m, and a number average fiber length L in the range of 50 to 400 $\mu$m, the glass fiber content C of the glass-fiber-reinforced resin plate is in the range of 25.0 to 55.0% by mass, and the Ds, $D_L$, L, and C satisfy the above formula (1).

Here, the glass-fiber-reinforced resin plate being excellent in dimensional stability means that the warp at the thickness of 0.4 mm is 1.20 mm or less. The glass-fiber-reinforced resin plate being excellent in strength means that the bending strength is 150 MPa or more, as measured by a static tensile test according to JIS K 7171:2016, using an A-type dumbbell test piece (thickness: 4 mm) according to JIS K 7165:2008 of a glass fiber-reinforced resin composition having the same composition as that of the glass fiber-reinforced resin plate. The glass-fiber-reinforced resin plate being excellent in surface smoothness means that the arithmetic average roughness Ra is 0.45 $\mu$m or less, as measured according to JIS B 0601:1982 using a flat plate test piece of 80 mm in length × 60 mm in width × 2 mm in thickness of a glass fiber-reinforced resin composition having the same composition as that of the glass-fiber-reinforced resin plate. The glass-fiber-reinforced resin plate being excellent in productivity means that a glass fiber-reinforced resin composition constituting the glass-fiber-reinforced resin plate has a fluidity index of 90% or less. The fluidity index will be mentioned below.

It is preferable that the glass-fiber-reinforced resin plate of the present invention comprise glass fiber having a minor axis Ds in the range of 4.8 to 11.5 $\mu$m, a major axis $D_L$ in the range of 29.0 to 48.0 $\mu$m, and a number average fiber length L in the range of 150 to 390 $\mu$m, the glass fiber content C be in the range of 30.0 to 50.0% by mass, and the Ds, $D_L$, L, and C satisfy the following formula (2):

$$0.32 \leq 1000 \times D_S \times D_L^3 \times (C/100)^4/L^3 \leq 0.94 \ ...(2).$$

The glass-fiber-reinforced resin plate of the present invention can achieve more excellent dimensional stability, excellent strength, more excellent surface smoothness, and excellent productivity when the glass fiber has a minor axis Ds in the range of 4.8 to 11.5 $\mu$m, a major axis $D_L$ in the range of 29.0 to 48.0 $\mu$m, and a number average fiber length L in the range of 150 to 390 $\mu$m, the glass fiber content C of the glass-fiber-reinforced resin plate is in the range of 30.0 to 50.0% by mass, and the Ds, $D_L$, L, and C satisfy the above formula (2).

Here, the glass-fiber-reinforced resin plate being more excellent in dimensional stability means that the warp at the thickness of 0.4 mm is 1.00 mm or less. The glass-fiber-reinforced resin plate being more excellent in surface smoothness means that the arithmetic average roughness Ra is 0.40 $\mu$m or less.

It is more preferable that the glass-fiber-reinforced resin plate of the present invention comprise glass fiber having a minor axis Ds in the range of 5.0 to 11.0 $\mu$m, a major axis $D_L$ in the range of 30.0 to 44.0 $\mu$m, and a number average fiber length L in the range of 170 to 380 $\mu$m, the glass fiber content C be in the range of 35.0 to 47.5% by mass, and the Ds, $D_L$, L, and C satisfy the following formula (3):

$$0.32 \leq 1000 \times D_S \times D_L^3 \times (C/100)^4/L^3 \leq 0.70 \ ...(3).$$

The glass-fiber-reinforced resin plate of the present invention can achieve further excellent dimensional stability, more excellent strength, more excellent surface smoothness, and excellent productivity when the glass fiber has a minor axis Ds in the range of 5.0 to 11.0 $\mu$m, a major axis $D_L$ in the range of 30.0 to 44.0 $\mu$m, and a number average fiber length L in the range of 170 to 380 $\mu$m, the glass fiber content C of the glass-fiber-reinforced resin plate is in the range of 35.0 to 47.5% by mass, and the Ds, $D_L$, L, and C satisfy the above formula (3).

Here, the glass-fiber-reinforced resin plate being further excellent in dimensional stability means that the warp at the thickness of 0.4 mm is 0.95 mm or less. The glass-fiber-reinforced resin plate being more excellent in strength means that the bending strength is 200 MPa or more.

It is further preferable that the glass-fiber-reinforced resin plate of the present invention comprise glass fiber having a minor axis Ds in the range of 5.0 to 6.5 $\mu$m, a major axis $D_L$ in the range of 30.0 to 36.0 $\mu$m, and a number average fiber length L in the range of 180 to 290 $\mu$m, the glass fiber content C be in the range of 40.0 to 45.0% by mass, and the Ds, $D_L$, L, and C satisfy the following formula (4):

$$0.32 \leq 1000 \times D_S \times D_L^3 \times (C/100)^4/L^3 \leq 0.52 \ ...(4).$$

The glass-fiber-reinforced resin plate of the present invention can achieve particularly excellent dimensional stability, more excellent strength, further excellent surface smoothness, and excellent productivity when the glass fiber has a minor axis Ds in the range of 5.0 to 6.5 $\mu$m, a major axis $D_L$ in the range of 30.0 to 36.0 $\mu$m, and a number average fiber length L in the range of 180 to 290 $\mu$m, the glass fiber content C of the glass-fiber-reinforced resin plate is in the range of 40.0 to 45.0% by mass, and the Ds, $D_L$, L, and C satisfy the above formula (4).

Here, the glass-fiber-reinforced resin plate being particularly excellent in dimensional stability means that the warp at the thickness of 0.4 mm is 0.90mm or less. The glass-fiber-reinforced resin plate being further excellent in surface smoothness means that the arithmetic average roughness Ra is 0.38 $\mu$m or less.

In the glass-fiber-reinforced resin plate of the present invention, for example, polycarbonate can be used as the amorphous thermoplastic resin.

Description of Embodiments

Hereinafter, embodiments of the present invention will be described in detail.

The glass-fiber-reinforced resin plate of the present embodiment is a molded article comprising glass fiber having a flat cross-sectional shape, and a resin.

In the glass-fiber-reinforced resin plate of the present embodiment, the glass composition of glass forming the glass fiber is not particularly limited. In the glass-fiber-reinforced resin plate of the present embodiment, examples of the glass composition that may be taken by the glass fiber can include the most common E glass composition, a high strength and high modulus glass composition, a high modulus and easily-producible glass composition, and a low dielectric constant and low dielectric tangent glass composition. From the viewpoint of enhancing the strength of the glass-fiber-reinforced resin plate, the glass composition of the glass fiber is preferably the high strength and high modulus glass composition or the high modulus and easily-producible glass composition. From the viewpoint of lowering the dielectric constant and dielectric loss tangent of the glass-fiber-reinforced resin plate to thereby reduce the transmission loss of high frequency signals passing through the glass-fiber-reinforced resin plate, the glass composition of the glass fiber is preferably the low dielectric constant and low dielectric tangent glass composition.

The E glass composition is a composition including $SiO_2$ in the range of 52.0 to 56.0% by mass, $Al_2O_3$ in the range of 12.0 to 16.0% by mass, MgO and CaO in the range of 20.0 to 25.0% by mass in total, and $B_2O_3$ in the range of 5.0 to 10.0% by mass with respect to the total amount of the glass fiber.

The high strength and high modulus glass composition is a composition including $SiO_2$ in the range of 60.0 to 70.0% by mass, $Al_2O_3$ in the range of 20.0 to 30.0% by mass, MgO in the range of 5.0 to 15.0% by mass, $Fe_2O_3$ in the range of 0 to 1.5% by mass, and $Na_2O$, $K_2O$, and $Li_2O$ in the range of 0 to 0.2% by mass in total with respect to the total amount of the glass fiber.

The high modulus and easily-producible glass composition is a composition including $SiO_2$ in the range of 57.0 to 60.0% by mass, $Al_2O_3$ in the range of 17.5 to 20.0% by mass, MgO in the range of 8.5 to 12.0% by mass, CaO in the range of 10.0 to 13.0% by mass, and $B_2O_3$ in the range of 0.5 to 1.5% by mass, and including $SiO_2$, $Al_2O_3$, MgO, and CaO of 98.0% by mass or more in total with respect to the total amount of the glass fiber.

The low dielectric constant and low dielectric tangent glass composition is a composition including $SiO_2$ in the range of 48.0 to 62.0% by mass, $B_2O_3$ in the range of 17.0 to 26.0% by mass, $Al_2O_3$ in the range of 9.0 to 18.0% by mass, CaO in the range of 0.1 to 9.0% by mass, MgO in the range of 0 to 6.0% by mass, $Na_2O$, $K_2O$, and $Li_2O$ in the range of 0.05 to 0.5% by mass in total, $TiO_2$ in the range of 0 to 5.0% by mass, SrO in the range of 0 to 6.0% by mass, $F_2$ and $Cl_2$ in the range of 0 to 3.0% by mass in total, and $P_2O_5$ in the range of 0 to 6.0% by mass with respect to the total amount of the glass fiber.

Regarding measurement of the content of each component of the glass compositions mentioned above, the content of Li as the light element can be measured with an ICP emission spectroscopic analyzer, and the contents of the other elements can be measured with a wavelength dispersive X-ray fluorescence analyzer. An example of the measurement method is as follows. The glass fiber is cut into an appropriate size, then placed in a platinum crucible, and melted with stirring while being held at a temperature of 1550°C for 6 hours in an electric furnace to obtain a homogeneous molten glass. Here, when organic matter adheres to the surface of the glass fiber, or when the glass fiber is mainly included as a reinforcing material in organic matter (resin), the glass fiber is used after the organic matter is removed by, for example, heating for about 2 to 24 hours in a muffle furnace at 300 to 650°C. Next, the obtained molten glass is poured onto a carbon plate to produce a glass cullet, and then pulverized into powder to thereby obtain glass powder. Regarding Li as a light element, the glass powder is thermally decomposed with an acid and then quantitatively analyzed using an ICP emission spectroscopic analyzer. Regarding other elements, the glass powder is molded into a disc shape by a pressing machine and then quantitatively analyzed using a wavelength dispersive X-ray fluorescence analyzer. These quantitative analysis results are converted in terms of oxides to calculate the content of each component and the total amount, and the above content (% by mass) of each component can be determined from these numerical values.

The glass fiber comprising the above glass composition can be produced as follows. First, a glass raw material (glass batch) prepared to have the above composition is supplied to a melting furnace and melted at a temperature in the range of 1450 to 1550°C, for example. Then, the melted glass batch (molten glass) is drawn from 1 to 30000 nozzle tips of a bushing controlled at a predetermined temperature and rapidly cooled to form glass filaments. Subsequently, the glass filaments formed are applied with a sizing agent or binder using an applicator as an application apparatus. While 1 to 30000 of the glass filaments are bundled using a bundling shoe, the glass filaments are wound on a tube at a high speed using a winding apparatus to enable glass fiber to be obtained.

Here, glass fiber having a flat cross-sectional shape for use in the glass-fiber-reinforced resin plate of the present embodiment can be obtained by allowing the nozzle tip to have a non-circular shape and to have a protrusion or a notch for rapidly cooling the molten glass and controlling the temperature condition. Adjusting the diameter of the nozzle tip, winding speed, temperature conditions, and the like can adjust the minor axis and major axis of the glass fiber. For example, accelerating the winding speed can make the minor axis and major axis smaller, and reducing the winding speed can make the minor axis and major axis larger.

The glass fiber having a flat cross-sectional shape for use in the glass-fiber-reinforced resin plate of the present embodiment has a minor axis Ds in the range of 4.5 to 12.0 $\mu$m, preferably 4.8 to 11.5 $\mu$m, more preferably 5.0 to 11.0 $\mu$m, and further preferably 5.0 to 6.5 $\mu$m, and a major axis $D_L$ in the range of 20.0 to 50.0 $\mu$m, preferably 29.0 to 48.0 $\mu$m, more preferably 30.0 to 44.0 $\mu$m, and further preferably 33.0 to 36.0 $\mu$m. The ratio of the major axis $D_L$ to the minor axis Ds ($D_L/D_S$) is, for example, in the range of 3.5 to 9.0, preferably in the range of 4.5 to 8.0, more preferably in the range of 5.0 to 8.0, and further preferably in the range of 5.5 to 6.5. The flat cross-sectional shape is preferably an elliptical shape or long-oval shape, and more preferably a long-oval shape. Here, the long-oval shape is a shape including a rectangle to which semicircles are attached to both ends, or a shape similar thereto.

The converted fiber diameter of the glass fiber having a flat cross-sectional shape for use in the glass-fiber-reinforced resin plate of the present embodiment is, for example, in the range of 11.0 to 32.0 $\mu$m, preferably in the range of 12.0 to 22.0 $\mu$m, more preferably in the range of 12.5 to 20.0 $\mu$m, and further preferably in the range of 13.5 to 18.0 $\mu$m. Here, the converted fiber diameter means the diameter of glass fiber that has the same cross-sectional area as that of the glass fiber having a flat cross-sectional shape and comprises a circular cross section.

The minor axis Ds and major axis $D_L$ of the glass fiber having a flat cross-sectional shape in the glass-fiber-reinforced resin plate of the present embodiment can be calculated as follows, for example. First, a cross section of the glass-fiber-reinforced resin plate is polished, then, the length of the major axis $D_L$, which is the longest side that passes through the substantial center of the glass filament cross section, and the minor axis Ds, which is the side that orthogonally intersects the major axis $D_L$ at the substantial center of the glass filament cross section, of 100 or more glass filaments is measured using an electron microscope, and the average values thereof are determined.

The glass fiber is usually formed by bundling a plurality of glass filaments, but in the glass-fiber-reinforced resin plate, which has been subjected to molding processing, the glass filaments are debundled and present in a dispersed state in the glass-fiber-reinforced resin plate.

Here, examples of a preferable form taken by the glass fiber having a flat cross-sectional shape in the glass-fiber-reinforced resin plate of the present embodiment before molding processing can include chopped strands obtained by cutting glass fiber having the number of glass filaments constituting the glass fiber (number bundled) (also referred to as a glass fiber bundle or glass strand) of preferably 1 to 20000, more preferably 50 to 10000, and further preferably 1000 to 8000 into a length of preferably 1.0 to 100.0 mm, more preferably 1.2 to 51.0 mm, further preferably 1.5 to 30.0 mm, particularly preferably 2.0 to 15.0 mm, and most preferably 2.3 to 7.8 mm.

Other examples of the form that may be taken by the glass fiber having a flat cross-sectional shape in the glass-fiber-reinforced resin plate of the present embodiment before molding processing can include rovings and cut fiber, in addition to chopped strands. The roving is a form in which the number of glass filaments constituting the glass fiber is 10 to 30000 and which is obtained without cutting. The cut fiber is a form in which the number of glass filaments constituting the glass fiber is 1 to 20000 and which is obtained by pulverization so as to have a length in the range of 0.001 to 0.900 mm by a known method such as a ball mill or Henschel mixer.

In the glass-fiber-reinforced resin plate of the present embodiment, the glass fiber may be coated with organic matter on the surface thereof for the purposes such as improvement of adhesiveness between glass fiber and a resin, and improvement of uniform dispersibility of glass fiber in a mixture of glass fiber and a resin or inorganic material. Examples of such organic matter can include resins such as urethane resins, epoxy resins, vinyl acetate resins, acrylic resins, modified polypropylene, particularly carboxylic acid-modified polypropylene, and a copolymer of a (poly)carboxylic acid, particularly maleic acid and an unsaturated monomer, or a silane coupling agent.

In the glass-fiber-reinforced resin plate of the present embodiment, the glass fiber may be coated with the composition including a lubricant, a surfactant, and the like in addition to these resins or a silane coupling agent. Such a composition covers the glass fiber at a rate of 0.1 to 2.0% by mass based on the mass of the glass fiber in a state where it is not coated with the composition.

The glass fiber can be coated with organic matter by applying the sizing agent or the binder containing a solution of the resin, the silane coupling agent, or the composition to glass fiber using a known method such as a roller applicator, for example, in the manufacturing process of the glass fiber and then drying the glass fiber to which the solution of the resin, the silane coupling agent, or the composition is applied.

Here, examples of the silane coupling agent can include aminosilanes, chlorosilanes, epoxysilanes, mercaptosilanes, vinylsilanes, acrylsilanes, and cationic silanes. As the silane coupling agent, these compounds can be used singly or in combination of two or more.

Examples of the aminosilanes can include $\gamma$-aminopropyltriethoxysilane, N-$\beta$-(aminoethyl)-$\gamma$-aminopropyltrimethoxysilane, N-$\beta$-(aminoethyl)-N'-$\beta$-(aminoethyl)-$\gamma$-aminopropyltrimethoxysilane, and $\gamma$-anilinopropyltrimethoxysilane.

Examples of the chlorosilanes can include $\gamma$-chloropropyltrimethoxysilane.

Examples of the epoxysilanes can include $\gamma$-glycidoxypropyltrimethoxysilane and $\beta$-(3,4-epoxycyclohexyl)ethyl-

trimethoxysilane.

Examples of the mercaptosilanes can include γ-mercaptotrimethoxysilane.

Examples of the vinylsilanes can include vinyltrimethoxysilane and N-β-(N-vinylbenzylaminoethyl)-γ-aminopropyltrimethoxysilane.

Examples of the acrylsilanes can include γ-methacryloxypropyltrimethoxysilane.

Examples of the cationic silanes can include N-(vinylbenzyl)-2-aminoethyl-3-aminopropyltrimethoxysilane hydrochloride and N-phenyl-3-aminopropyltrimethoxysilane hydrochloride.

Examples of the lubricant can include modified silicone oils, animal oils and hydrogenated products thereof, vegetable oils and hydrogenated products thereof, animal waxes, vegetable waxes, mineral waxes, condensates of a higher saturated fatty acid and a higher saturated alcohol, polyethyleneimine, polyalkylpolyamine alkylamide derivatives, fatty acid amides, and quaternary ammonium salts. As the lubricant, these can be used singly or in combinations of two or more.

Examples of the animal oils can include beef tallow.

Examples of the vegetable oils can include soybean oil, coconut oil, rape-seed oil, palm oil, and castor oil.

Examples of the animal waxes can include beeswax and lanolin.

Examples of the vegetable waxes can include candelilla wax and carnauba wax.

Examples of the mineral waxes can include paraffin wax and montan wax.

Examples of the condensates of a higher saturated fatty acid and a higher saturated alcohol can include stearates such as lauryl stearate.

Examples of the fatty acid amides can include dehydrated condensates of a polyethylenepolyamine such as diethylenetriamine, triethylenetetramine, or tetraethylenepentamine and a fatty acid such as lauric acid, myristic acid, palmitic acid, or stearic acid.

Examples of the quaternary ammonium salts can include alkyltrimethylammonium salts such as lauryltrimethylammonium chloride.

Examples of the surfactant can include nonionic surfactants, cationic surfactants, anionic surfactants, and amphoteric surfactants. As the surfactant, these can be used singly or in combination of two or more.

Examples of the nonionic surfactant can include ethylene oxide propylene oxide alkyl ether, polyoxyethylene alkyl ether, polyoxyethylene-polyoxypropylene-block copolymer, alkyl polyoxyethylene-polyoxypropylene block copolymer ether, polyoxyethylene fatty acid ester, polyoxyethylene fatty acid monoester, polyoxyethylene fatty acid diester, polyoxyethylene sorbitan fatty acid ester, glycerol fatty acid ester ethylene oxide adduct, polyoxyethylene castor oil ether, hydrogenated castor oil ethylene oxide adduct, alkylamine ethylene oxide adduct, fatty acid amide ethylene oxide adduct, glycerol fatty acid ester, polyglycerol fatty acid ester, pentaerythritol fatty acid ester, sorbitol fatty acid ester, sorbitan fatty acid ester, sucrose fatty acid ester, polyhydric alcohol alkyl ether, fatty acid alkanolamide, acetylene glycol, acetylene alcohol, ethylene oxide adduct of acetylene glycol, and ethylene oxide adduct of acetylene alcohol.

Examples of the cationic surfactant can include alkyldimethylbenzylammonium chloride, alkyltrimethylammonium chloride, alkyl dimethyl ethyl ammonium ethyl sulfate, higher alkylamine acetate, higher alkylamine hydrochloride, and the like, adducts of ethylene oxide to a higher alkylamine, condensates of a higher fatty acid and polyalkylene polyamine, a salt of an ester of a higher fatty acid and alkanolamine, a salt of higher fatty acid amide, imidazoline cationic surfactant, and alkyl pyridinium salt.

Examples of the anionic surfactant can include higher alcohol sulfate salts, higher alkyl ether sulfate salts, α-olefin sulfate salts, alkylbenzene sulfonate salts, α-olefin sulfonate salts, reaction products of fatty acid halide and N-methyl taurine, dialkyl sulfosuccinate salts, higher alcohol phosphate ester salts, and phosphate ester salts of higher alcohol ethylene oxide adduct.

Examples of the amphoteric surfactant can include amino acid amphoteric surfactants such as alkali metal salts of alkylaminopropionic acid, betaine amphoteric surfactants such as alkyldimethylbetaine, and imidazoline amphoteric surfactants.

Next, the resin contained in the glass-fiber-reinforced resin plate of the present embodiment is an amorphous thermoplastic resin. Examples thereof can include polycarbonate, polyphenylene ether, modified polyphenylene ether, polystyrene, polyacrylonitrile, styrene/acrylonitrile copolymer, acrylonitrile/butadiene/styrene copolymer, poly methyl methacrylate, polyarylate, polyimide, polyamideimide, polyetherimide, polybenzimidazole, polysulfone, polyethersulfone, polyphenylsulfone, polyvinyl chloride, and ethylene-vinyl acetate copolymer, and the resin is preferably polycarbonate.

Examples of the polycarbonate can include polymers obtainable by a transesterification method in which a dihydroxydiaryl compound is reacted with a carbonate such as diphenyl carbonate in a molten state; or polymers obtainable by a phosgene method in which a dihydroxyaryl compound is reacted with phosgene.

Examples of the polyphenylene ether can include poly(2,3-dimethyl-6-ethyl-1,4-phenylene ether), poly(2-methyl-6-chloromethyl-1,4-phenylene ether), poly(2-methyl-6-hydroxyethyl-1,4-phenylene ether), poly(2-methyl-6-n-butyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly[2-(4'-methylphenyl)-1,4-phenylene ether], poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene ether), poly(2-chloro-6-ethyl-1,4-phenylene ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly(2-methyl-6-ethyl-1,4-phenylene ether), poly(2,6-dibromo-1,4-phenylene ether), poly(2,6-dichloro-1,4-phenylene ether), poly(2,6-diethyl-1,4-phenylene ether), and poly(2,6-dimethyl-1,4-phenylene ether).

Examples of the modified polyphenylene ether can include a polymer alloy of poly(2,6-dimethyl-1,4-phenylene)ether and polystyrene; a polymer alloy of poly(2,6-dimethyl-1,4-phenylene)ether and a styrene/butadiene copolymer; a polymer alloy of poly(2,6-dimethyl-1,4-phenylene)ether and a styrene/maleic anhydride copolymer; a polymer alloy of poly(2,6-dimethyl-1,4-phenylene)ether and polyamide; a polymer alloy of poly(2,6-dimethyl-1,4-phenylene)ether and a styrene/butadiene/acrylonitrile copolymer; the polyphenylene ether including a functional group such as an amino group, epoxy group, carboxy group, or styryl group introduced at a polymer chain end thereof, and the polyphenylene ether including a functional group such as an amine group, epoxy group, carboxy group, styryl group, or methacryl group introduced at a side chain in the polymer chain thereof.

Examples of the polystyrene can include general-purpose polystyrene (GPPS), which is an atactic polystyrene having an atactic structure, high impact polystyrene (HIPS) with a rubber component added to GPPS, and syndiotactic polystyrene having a syndiotactic structure.

Examples of the polyvinyl chloride can include a vinyl chloride homopolymer, a copolymer of a vinyl chloride monomer and a copolymerizable monomer, or a graft copolymer obtained by graft polymerization of a vinyl chloride monomer to a polymer polymerized by a conventionally known method such as emulsion polymerization method, suspension polymerization method, micro suspension polymerization method, or bulk polymerization method.

The glass-fiber-reinforced resin plate of the present embodiment can be obtained by, for example, kneading chopped strands that are formed by bundling glass filaments of the glass fiber having a flat cross-sectional shape and have a predetermined length, and the resin in a twin-screw kneader and injection-molding the resulting resin pellets. The glass-fiber-reinforced resin plate of the present embodiment also can be obtained by using a known molding method such as injection compression molding method, two-color molding method, hollow molding method, foam molding method (including supercritical fluid foam molding method), insert molding method, in-mold coating molding method, extrusion molding method, sheet molding method, thermoforming method, rotational molding method, laminate molding method, press molding method, blow molding method, stamping molding method, infusion method, hand lay-up method, spray-up method, resin transfer molding method, sheet molding compound method, bulk molding compound method, pultrusion method, and filament winding method. The shape of the glass-fiber-reinforced resin plate of the present embodiment obtained as mentioned above may be a flat plate, a flat plate having pores or irregularities, or a plate having a curved surface or bending. Here, as one aspect of the plate having a curved surface or bending, a hollow cylinder, a hollow polygonal prism, and a box are included.

The thickness of the glass-fiber-reinforced resin plate of the present embodiment is in the range of 0.5 mm or less, preferably in the range of 0.4 mm or less, more preferably in the range of 0.1 to 0.4 mm, further preferably in the range of 0.2 to 0.4 mm, and particularly preferably in the range of 0.3 to 0.4 mm.

Here, the thickness of the glass-fiber-reinforced resin plate of the present embodiment can be obtained by measuring the thickness at 3 or more points spaced from one another in the glass-fiber-reinforced resin plate by a known measuring method using a micrometer or the like and averaging the measurements.

The number average fiber length L of the glass fiber included in the glass-fiber-reinforced resin plate of the present embodiment is in the range of 50 to 400 $\mu$m, preferably in the range of 150 to 300 $\mu$m, more preferably in the range of 170 to 380 $\mu$m, further preferably in the range of 180 to 290 $\mu$m, and particularly preferably in the range of 200 to 270 $\mu$m.

Here, when the glass-fiber-reinforced resin plate of the present embodiment is obtained by injection molding, the number average fiber length L of the glass fiber can be controlled by adjusting the length of chopped strands to be fed into the twin-screw kneader or the screw rotation speed of the twin-screw kneader, for example. For instance, the length of chopped strand to be fed into the twin-screw kneader is adjusted in the range of 1.0 to 100.0 mm. Making the length of chopped strand to be fed into the twin-screw kneader longer within the range enables the number average fiber length L of the glass fiber to be longer, and making the length of chopped strand shorter within the range enables the number average fiber length L of the glass fiber to be shorter. The screw rotation speed during twin-screw kneading is adjusted within the range of 10 to 1000 rpm. Making the screw rotation speed during twin-screw kneading lower within the range enables the number average fiber length L of the glass fiber to be longer, and making the screw rotation speed higher within the range enables the number average fiber length L of the glass fiber to be shorter.

The number average fiber length L of the glass fiber included in the glass-fiber-reinforced resin plate of the present embodiment can be calculated by a method described in examples mentioned below.

In the glass-fiber-reinforced resin plate of the present embodiment, the glass fiber content C is in the range of 25.0 to 55.0% by mass, preferably in the range of 30.0 to 50.0% by mass, more preferably in the range of 35.0 to 47.5% by mass, and further preferably in the range of 40.0 to 45.0% by mass.

The glass fiber content C in the glass-fiber-reinforced resin plate of the present embodiment can be calculated according to JIS K 7052:1999.

In the glass-fiber-reinforced resin plate of the present embodiment, the minor axis Ds of the glass fiber is in the range of 4.5 to 12.0 $\mu$m, the major axis $D_L$ thereof is in the range of 20.0 to 50.0 $\mu$m, the number average fiber length L thereof is in the range of 50 to 400 $\mu$m, the glass fiber content C of the glass-fiber-reinforced resin plate is in the range of 25.0 to 55.0% by mass, and the $D_S$, $D_L$, L, and C satisfy the following formula (1):

$$0.32 \leq 1000 \times D_S \times D_L^3 \times (C/100)^4/L^3 \leq 1.22 \ ...(1).$$

It is preferable that the glass-fiber-reinforced resin plate of the present embodiment comprise glass fiber having a minor axis Ds in the range of 4.8 to 11.5 $\mu$m, a major axis $D_L$ in the range of 29.0 to 48.0 $\mu$m, and a number average fiber length L in the range of 150 to 390 $\mu$m, the glass fiber content C be in the range of 30.0 to 50.0% by mass, and the Ds, $D_L$, L, and C satisfy the following formula (2):

$$0.32 \leq 1000 \times D_S \times D_L^3 \times (C/100)^4/L^3 \leq 0.94 \ ...(2).$$

It is more preferred that the glass-fiber-reinforced resin plate of the present embodiment comprise glass fiber having a minor axis Ds in the range of 5.0 to 11.0 $\mu$m, a major axis $D_L$ in the range of 30.0 to 44.0 $\mu$m, and a number average fiber length L in the range of 170 to 380 $\mu$m, the glass fiber content C be in the range of 35.0 to 47.5% by mass, and the Ds, $D_L$, L, and C satisfy the following formula (3):

$$0.32 \leq 1000 \times D_S \times D_L^3 \times (C/100)^4/L^3 \leq 0.70 \ ...(3).$$

It is further preferred that the glass-fiber-reinforced resin plate of the present embodiment comprise glass fiber having a minor axis Ds in the range of 5.0 to 6.5 $\mu$m, a major axis $D_L$ in the range of 30.0 to 36.0 $\mu$m, and a number average fiber length L in the range of 180 to 290 $\mu$m, the glass fiber content C be in the range of 40.0 to 45.0% by mass, and the $D_S$, $D_L$, L, and C satisfy the following formula (4):

$$0.32 \leq 1000 \times D_S \times D_L^3 \times (C/100)^4/L^3 \leq 0.52 \ ...(4).$$

Further, in the glass-fiber-reinforced resin plate of the present embodiment, it is especially preferable that the minor axis Ds, major axis $D_L$, number average fiber length L of the glass fiber, and the glass fiber content C be each in any of the ranges, and the Ds, $D_L$, L, and C satisfy the following formula (5), particularly preferably satisfy the following formula (6), and most preferably satisfy the following formula (7):

$$0.32 \leq 1000 \times D_S \times D_L^3 \times (C/100)^4/L^3 \leq 0.42 \ ...(5);$$

$$0.33 \leq 1000 \times D_S \times D_L^3 \times (C/100)^4/L^3 \leq 0.41 \ ...(6);$$

and

$$0.34 \leq 1000 \times D_S \times D_L^3 \times (C/100)^4/L^3 \leq 0.40 \ ...(7).$$

The glass-fiber-reinforced resin plate of the present embodiment is preferably used in housings and components of portable electronic devices such as smartphones, tablets, notebook computers, and mobile computers (such as motherboards, frames, speakers, and antennas).

Next, Examples, Comparative Examples, and Reference Examples of the present invention will be shown.

Examples

[Example 1]

In the present Example, chopped strands of 3 mm in length that were formed by bundling glass filaments and coated with a composition containing a silane coupling agent, the glass filaments having a flat cross-sectional shape with a minor axis Ds of 5.5 $\mu$m, a major axis $D_L$ of 33.0 $\mu$m, and $D_L/D_S$ of 6.0 and having the E glass composition, and polycarbonate (manufactured by Teijin Limited, trade name: Panlite 1250Y, denoted as PC in Tables 1 to 3) were kneaded in a twin-screw kneader (manufactured by Shibaura Machine Co., Ltd., trade name: TEM-26SS) at a screw rotation speed of 100 rpm and a temperature of 290°C to prepare resin pellets having a glass fiber content C of 40% by mass.

Next, injection molding was conducted in an injection molding apparatus (manufactured by Nissei Plastic Industrial Co., Ltd., trade name: PNX60) at a mold temperature of 130°C and an injection temperature of 320°C using the resin pellets obtained in the present Example to produce a glass-fiber-reinforced resin plate (flat plate) having dimensions of 130 mm in length × 15 mm in width × 0.4 mm in thickness. With respect to the resulting glass-fiber-reinforced resin plate (flat plate), the number average fiber length of the glass fiber was calculated by a method mentioned below.

Next, with respect to the glass-fiber-reinforced resin plate (flat plate) produced in the present Example, the warp, injection peak pressure, and fluidity index were calculated and the bending strength and arithmetic average roughness Ra were measured by methods mentioned below. The results are shown in Table 1.

[Number average fiber length of glass fiber]

The number average fiber length of the glass fiber in the glass-fiber-reinforced resin plate was calculated by the following method. First, the glass-fiber-reinforced resin plate was heated in a muffle furnace at 650°C for 0.5 to 24 hours to decompose organic matter. Then, the remaining glass fiber was transferred to a glass petri dish, and the glass fiber was dispersed using acetone on the surface of the petri dish. Subsequently, the fiber lengths of 1000 or more glass fibers dispersed on the petri dish surface were measured using a stereoscopic microscope and averaged to calculate the number average fiber length of the glass fibers.

[Warp at thickness of 0.4 mm]

Injection molding was conducted in an injection molding apparatus (manufactured by Nissei Plastic Industrial Co., Ltd., trade name: PNX60) at a mold temperature of 130°C and an injection temperature of 320°C using the resin pellets to mold a test piece for warp measurement as a flat plate having dimensions of 130 mm in length × 15 mm in width × 0.4 mm in thickness. When one corner of the 0.4-mm thick test piece for warp measurement was brought into contact with a flat surface, the distance between the corner positioned diagonally to the one corner in contact with the flat surface and the flat surface was measured with calipers. When each of the four corners of the 0.4-mm thick test piece for warp measurement was brought into contact with the flat surface, the diagonal corner distance was measured, and the measurements were averaged to calculate the warp at the thickness of 0.4 mm.

[Warp at thickness of 1.5mm]

Injection molding was conducted in an injection molding apparatus (manufactured by Nissei Plastic Industrial Co., Ltd., trade name: PNX60) at a mold temperature of 90°C and an injection temperature of 270°C using the resin pellets to mold a test piece for warp measurement as a flat plate having dimensions of 80 mm in length × 60 mm in width × 1.5 mm in thickness. When one corner of the 1.5-mm thick test piece for warp measurement was brought into contact with a flat surface, the distance between the corner positioned diagonally to the one corner in contact with the flat surface and the flat surface was measured with calipers. When each of the four corners of the 1.5-mm thick test piece for warp measurement was brought into contact with the flat surface, the diagonal corner distance was measured, and the measurements were averaged to calculate the warp at the thickness of 1.5 mm.

[Injection peak pressure]

The resin pellets were used to conduct injection molding in an injection molding apparatus (manufactured by Nissei Plastic Industrial Co. Ltd., trade name: NEX80) at a mold temperature of 90°C and an injection temperature of 270°C, and the maximum pressure applied on the injection molding apparatus was measured during production of an A-type dumbbell test piece (thickness: 4 mm) according to JIS K 7165:2008. This measurement was conducted 20 times or more, and the measurements were averaged to calculate the injection peak pressure.

[Fluidity index]

The injection peak pressure was measured by the method mentioned above using resin pellets that had the same composition (i.e., the glass fiber content C is the same) and were produced by the same method as in the case of using glass fiber having a flat cross-sectional shape except that glass fiber comprising a circular cross section having a glass fiber diameter of 11 $\mu$m was used. The resulting injection peak pressure was taken as a reference (100%), and the ratio of the injection peak pressure of the resin composition including glass fiber having a flat cross-sectional shape with respect to the reference was calculated and taken as the fluidity index. A smaller value of the fluidity index means that the fluidity of the resin composition is higher and the productivity of the glass-fiber-reinforced resin plate is more excellent.

[Bending strength]

The resin pellets were used to conduct injection molding in an injection molding apparatus (manufactured by Nissei Plastic Industrial Co. Ltd., trade name: NEX80) at a mold temperature of 90°C and an injection temperature of 270°C to produce an A-type dumbbell test piece (thickness: 4 mm) according to JIS K 7165:2008. The A-type dumbbell test piece was subjected to a static tensile test according to JIS K 7171:2016 under a condition of test temperature of 23°C using a precision universal tester (manufactured by Shimadzu Corporation, trade name: Autograph AG-5000B), and the measurement obtained was taken as the bending strength.

[Surface smoothness]

Injection molding was conducted in an injection molding apparatus (manufactured by Nissei Plastic Industrial Co., Ltd., trade name: NEX80) at a mold temperature of 90°C and an injection temperature of 270°C using the resin pellets to mold a flat plate having dimensions of 80 mm in length × 60 mm in width × 2mm in thickness as a test piece for surface roughness measurement. With respect to the test piece for surface roughness measurement, a surface roughness tester (manufactured by Mitutoyo Corporation, trade name: Portable Surface Roughness Tester Surftest SJ-301) was used to measure the arithmetic average roughness Ra according to JIS B 0601:1982, which was taken as the index of surface smoothness.

[Example 2]

In the present Example, resin pellets were produced exactly in the same manner as in Example 1 except that the glass fiber content C was 45% by mass.
Subsequently, a glass-fiber-reinforced resin plate (flat plate) was produced exactly in the same manner as in Example 1 except that the resin pellets obtained in the present Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 1.

[Example 3]

In the present Example, resin pellets were produced exactly in the same manner as in Example 1 except that glass filaments having a flat cross-sectional shape with a minor axis Ds of 11.0 $\mu$m, a major axis $D_L$ of 44.0 $\mu$m, and $D_L/D_S$ of 4.0 were used.
Subsequently, a glass-fiber-reinforced resin plate (flat plate) was produced exactly in the same manner as in Example 1 except that the resin pellets obtained in the present Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 1.

[Example 4]

In the present Example, resin pellets were produced exactly in the same manner as in Example 1 except that the glass fiber content C was 50% by mass.
Subsequently, a glass-fiber-reinforced resin plate (flat plate) was produced exactly in the same manner as in Example 1 except that the resin pellets obtained in the present Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 1.

[Comparative Example 1]

In the present Comparative Example, resin pellets were produced exactly in the same manner as in Example 1 except that glass filaments having a flat cross-sectional shape with a minor axis Ds of 7.0 $\mu$m, a major axis $D_L$ of 28.0 $\mu$m, and $D_L/D_S$ of 4.0 were used.

Subsequently, a glass-fiber-reinforced resin plate (flat plate) was produced exactly in the same manner as in Example 1 except that resin pellets obtained in the present Comparative Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 2.

[Comparative Example 2]

In the present Comparative Example, resin pellets were produced exactly in the same manner as in Example 1 except that the glass fiber content C was 30% by mass.

Subsequently, a glass-fiber-reinforced resin plate (flat plate) was produced exactly in the same manner as in Example 1 except that the resin pellets obtained in the present Comparative Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 2.

[Comparative Example 3]

In the present Comparative Example, resin pellets were produced exactly in the same manner as in Example 3 except that the glass fiber content C was 30% by mass.

Subsequently, a glass-fiber-reinforced resin plate (flat plate) was produced exactly in the same manner as in Example 1 except that the resin pellets obtained in the present Comparative Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 2.

[Comparative Example 4]

In the present Comparative Example, resin pellets were produced exactly in the same manner as in Example 3 except that the glass fiber content C was 45% by mass.

Subsequently, a glass-fiber-reinforced resin plate (flat plate) was produced exactly in the same manner as in Example 1 except that the resin pellets obtained in the present Comparative Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 2.

[Comparative Example 5]

In the present Comparative Example, resin pellets were produced exactly in the same manner as in Example 3 except that the glass fiber content C was 50% by mass.

Subsequently, a glass-fiber-reinforced resin plate (flat plate) was produced exactly in the same manner as in Example 1 except that the resin pellets obtained in the present Comparative Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 2.

[Comparative Example 6]

In the present Comparative Example, resin pellets were produced exactly in the same manner as in Example 1 except that cut fibers of 0.02 mm in length that were formed by bundling glass filaments and coated with a composition containing a silane coupling agent were used, the glass filaments having a flat cross-sectional shape with a minor axis Ds of 5.5 $\mu$m, a major axis $D_L$ of 33.0 $\mu$m, and $D_L/D_S$ of 6.0 and having the E glass composition.

Subsequently, a glass-fiber-reinforced resin plate (flat plate) was produced exactly in the same manner as in Example 1 except that the resin pellets obtained in the present Comparative Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 2.

[Reference Example 1]

In the present Reference Example, resin pellets were produced exactly in the same manner as in Example 1 except that a crystallinity thermoplastic resin, polybutylene terephthalate (manufactured by Polyplastics Co., Ltd., trade name: DURANEX 2000, denoted as PBT in Table 3) was used instead of polycarbonate and the temperature on kneading was set to 250°C.

Subsequently, a glass-fiber-reinforced resin plate (flat plate) was produced exactly in the same manner as in Example 1 except that the resin pellets obtained in the present Reference Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 3.

[Reference Example 2]

In the present Reference Example, resin pellets were produced exactly in the same manner as in Comparative Example 1 except that a crystallinity thermoplastic resin, polybutylene terephthalate (manufactured by Polyplastics Co., Ltd., trade name: DURANEX 2000, denoted as PBT in Table 3) was used instead of polycarbonate and the temperature on kneading was set to 250°C.

Subsequently, a glass-fiber-reinforced resin plate (flat plate) was produced exactly in the same manner as in Example 1 except that the resin pellets obtained in the present Reference Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 3.

[Reference Example 3]

In the present Reference Example, resin pellets were produced exactly in the same manner as in Example 1 except that glass filaments having a circular cross-sectional shape with a minor axis Ds of 11.0 $\mu$m, a major axis $D_L$ of 11.0 $\mu$m, and $D_L/D_S$ of 1.0 were used.

Subsequently, a glass-fiber-reinforced resin plate (flat plate) was produced exactly in the same manner as in Example 1 except that the resin pellets obtained in the present Reference Example were used. Then, the number average fiber length of the glass fiber, warp, injection peak pressure, and fluidity index were calculated and the bending strength and arithmetic average roughness Ra were measured, exactly in the same manner as in Example 1. The results are shown in Table 3.

[Table 1]

|  | Example 1 | Example 2 | Example 3 | Example 4 |
|---|---|---|---|---|
| Resin | PC | PC | PC | PC |
| Glass fiber minor axis $D_S$ ($\mu$m) | 5.5 | 5.5 | 11.0 | 5.5 |
| Glass fiber major axis $D_L$ ($\mu$m) | 33.0 | 33.0 | 44.0 | 33.0 |
| $D_L/D_S$ | 6.0 | 6.0 | 4.0 | 6.0 |
| Glass fiber content C (%) | 40 | 45 | 40 | 50 |
| Glass fiber number average fiber length L ($\mu$m) | 240 | 230 | 320 | 220 |
| $1000 \times D_S \times D_L{}^3 \times (C/100)^4/ L^3$ | 0.37 | 0.67 | 0.73 | 1.16 |
| Warp at thickness of 1.5 mm (mm) | 0 | 0 | 0 | 0 |

(continued)

| | Example 1 | Example 2 | Example 3 | Example 4 |
|---|---|---|---|---|
| Warp at thickness of 0.4 mm (mm) | 0.90 | 0.95 | 0.98 | 1.13 |
| Injection peak pressure (MPa) | 211.0 | 208.0 | 211.0 | 202.0 |
| Fluidity index (%) | 87.2 | 86.7 | 87.2 | 86.0 |
| Bending strength (MPa) | 203 | 207 | 192 | 210 |
| Arithmetic average roughness Ra ($\mu$m) | 0.37 | 0.40 | 0.40 | 0.44 |

[Table 2]

| | Comparative Example 1 | Comparative Example 2 | Comparative Example 3 | Comparative Example 4 | Comparative Example 5 | Comparative Example 6 |
|---|---|---|---|---|---|---|
| Resin | PC | PC | PC | PC | PC | PC |
| Glass fiber minor axis $D_S$ ($\mu$m) | 7.0 | 5.5 | 11.0 | 11.0 | 11.0 | 5.5 |
| Glass fiber major axis $D_L$ ($\mu$m) | 28.0 | 33.0 | 44.0 | 44.0 | 44.0 | 33.0 |
| $D_L/D_S$ | 4.0 | 6.0 | 4.0 | 4.0 | 4.0 | 6.0 |
| Glass fiber content C (%) | 40 | 30 | 30 | 45 | 50 | 40 |
| Glass fiber number average fiber length L ($\mu$m) | 265 | 260 | 340 | 310 | 300 | 70 |
| $1000 \times D_S \times D_L{}^3 \times (C/100)^4 / L^3$ | 0.21 | 0.09 | 0.19 | 1.29 | 2.17 | 14.75 |
| Warp at thickness of 1.5 mm (mm) | 0 | 0 | 0 | 0 | 0 | 0 |
| Warp at thickness of 0.4mm (mm) | 1.69 | 1.73 | 1.39 | 1.22 | 1.54 | 1.02 |
| Injection peak pressure (MPa) | 223.0 | 199.0 | 200.0 | 207.0 | 197.0 | 207.0 |
| Fluidity index (%) | 92.1 | 90.5 | 90.9 | 86.3 | 83.8 | 85.5 |
| Bending strength (MPa) | 208 | 170 | 170 | 195 | 198 | 135 |
| Arithmetic average roughness Ra ($\mu$m) | 0.39 | 0.31 | 0.32 | 0.47 | 0.50 | 0.42 |

[Table 3]

| | Reference Example 1 | Reference Example 2 | Reference Example 3 |
|---|---|---|---|
| Resin | PBT | PBT | PC |
| Glass fiber minor axis $D_S$ ($\mu$m) | 5.5 | 7.0 | 11.0 |
| Glass fiber major axis $D_L$ ($\mu$m) | 33.0 | 28.0 | 11.0 |
| $D_L/D_S$ | 6.0 | 4.0 | 1.0 |
| Glass fiber content C (%) | 40 | 40 | 40 |
| Glass fiber number average fiber length L ($\mu$m) | 252 | 270 | 230 |
| $1000 \times D_S \times D_L^3 \times (C/100)^4/L^3$ | 0.32 | 0.20 | 0.03 |
| Warp at thickness of 1.5 mm (mm) | 4.0 | 4.0 | 1.3 |
| Warp at thickness of 0.4 mm (mm) | 11.8 | 11.5 | 13.0 |
| Injection peak pressure (MPa) | 111.0 | 111.0 | 242.0 |
| Fluidity index (%) | 55.5 | 55.5 | 100 |
| Bending strength (MPa) | 230 | 234 | 205 |
| Arithmetic average roughness Ra ($\mu$m) | 0.33 | 0.30 | 0.51 |

It is obvious from Tables 1 to 3 that the glass-fiber-reinforced resin plates of Examples 1 to 4, which comprise glass fiber having a flat cross-sectional shape with a minor axis Ds in the range of 4.5 to 12.0 $\mu$m, a major axis $D_L$ in the range of 20.0 to 50.0 $\mu$m, and polycarbonate as an amorphous thermoplastic resin, and in which the number average fiber length L of the glass fiber is in the range of 50 to 400 $\mu$m, the glass fiber content C is in the range of 25.0 to 55.0% by mass, and the value of $1000 \times Ds \times D_L^3 \times (C/100)^4/L^3$ satisfies the formula (1), have a warp at the thickness of 0.4 mm as small as from 0.90 to 1.13 mm, and comprise excellent dimensional stability even if the thickness is 0.5 mm or less. It is further obvious that the glass-fiber-reinforced resin plates of Examples 1 to 4 have a bending strength as large as from 192 to 210 MPa and thus comprise excellent strength, have an arithmetic average roughness Ra as small as from 0.37 to 0.44 $\mu$m and thus comprise excellent surface smoothness, and have a fluidity index as small as from 86.0 to 87.2% and thus comprise excellent productivity.

In contrast, it is obvious that the glass-fiber-reinforced resin plates of Comparative Examples 1 to 3, in which the value of $1000 \times Ds \times D_L^3 \times (C/100)^4/L^3$ is less than 0.32 and does not satisfy the formula (1), and the glass-fiber-reinforced resin plates of Comparative Examples 4 and 5, in which the value of $1000 \times Ds \times D_L^3 \times (C/100)^4/L^3$ is more than 1.22 and does not satisfy the formula (1), have a warp at the thickness of 0.4 mm from 1.22 to 1.73 mm larger than that of Examples 1 to 4 and thus are inferior in dimensional stability, and it is obvious that the glass-fiber-reinforced resin plate of Comparative Example 6, in which the value of $1000 \times Ds \times D_L^3 \times (C/100)^4/L^3$ far exceeds 1.22, has a bending strength of 135 MPa smaller than that of Examples 1 to 4 and thus is inferior in strength.

It is also obvious that the glass-fiber-reinforced resin plates of Reference Examples of 1 to 2, which contain a crystallinity thermoplastic resin, polybutylene terephthalate, and contain no amorphous thermoplastic resin, and the glass-fiber-reinforced resin plate of Reference Example 3, which includes glass filaments (glass fiber) having a circular cross-sectional shape and includes no glass fiber having a flat cross-sectional shape, has a warp at the thickness of 0.4 mm from 11.5 to 13.0 mm larger than that of Examples 1 to 4 and thus is much inferior in dimensional stability.

## Claims

1.   A glass-fiber-reinforced resin plate having a thickness of 0.5 mm or less, comprising:

glass fiber that has a flat cross-sectional shape with a minor axis Ds in a range of 4.5 to 12.0 $\mu$m, and a major axis $D_L$ in a range of 20.0 to 50.0 $\mu$m; and
an amorphous thermoplastic resin, wherein
a number average fiber length L of the glass fiber is in a range of 50 to 400 $\mu$m, a glass fiber content C is in a range of 25.0 to 55.0% by mass, and the Ds, $D_L$, L, and C satisfy the following formula (1):

$$0.32 \leq 1000 \times D_S \times D_L{}^3 \times (C/100)^4/L^3 \leq 1.22 \; ...(1),$$

wherein $D_S$, $D_L$, and L are determined according to the description.

2. The glass-fiber-reinforced resin plate according to claim 1, comprising glass fiber that has the minor axis Ds in a range of 4.8 to 11.5 $\mu$m, the major axis $D_L$ in a range of 29.0 to 48.0 $\mu$m, and the number average fiber length L in a range of 150 to 390 $\mu$m, wherein
the glass fiber content C is in a range of 30.0 to 50.0% by mass, and the Ds, $D_L$, L, and C satisfy the following formula (2):

$$0.32 \leq 1000 \times D_S \times D_L{}^3 \times (C/100)^4/L^3 \leq 0.94 \; ...(2).$$

3. The glass-fiber-reinforced resin plate according to claim 1 or claim 2, comprising glass fiber that has the minor axis Ds in a range of 5.0 to 11.0 $\mu$m, the major axis $D_L$ in a range of 30.0 to 44.0 $\mu$m, and the number average fiber length L in a range of 170 to 380 $\mu$m, wherein
the glass fiber content C is in a range of 35.0 to 47.5% by mass, and the Ds, $D_L$, L, and C satisfy the following formula (3):

$$0.32 \leq 1000 \times D_S \times D_L{}^3 \times (C/100)^4/L^3 \leq 0.70 \; ...(3).$$

4. The glass-fiber-reinforced resin plate according to any one of claims 1 to 3, comprising glass fiber that has the minor axis Ds in a range of 5.0 to 6.5 $\mu$m, the major axis $D_L$ in a range of 30.0 to 36.0 $\mu$m, and the number average fiber length L in a range of 180 to 290 $\mu$m, wherein
the glass fiber content C is in a range of 40.0 to 45.0% by mass, and the Ds, $D_L$, L, and C satisfy the following formula (4):

$$0.32 \leq 1000 \times D_S \times D_L{}^3 \times (C/100)^4/L^3 \leq 0.52 \; ...(4).$$

5. The glass-fiber-reinforced resin plate according to any one of claims 1 to 4, wherein the amorphous thermoplastic resin is polycarbonate.

**Patentansprüche**

1. Glasfaserverstärkte Harzplatte, die eine Dicke von 0,5 mm oder weniger aufweist, umfassend:

Glasfasern, die eine flache Querschnittsform mit einer Nebenachse $D_S$ in einem Bereich von 4,5 bis 12,0 $\mu$m und einer Hauptachse $D_L$ in einem Bereich von 20,0 bis 50,0 $\mu$m aufweisen, und
ein amorphes thermoplastisches Harz, wobei
eine zahlenmittlere Faserlänge L der Glasfasern in einem Bereich von 50 bis 400 $\mu$m liegt, ein Glasfasergehalt C in einem Bereich von 25,0 bis 55,0 Massen-% liegt und Ds, $D_L$, L und C die folgende Formel (1) erfüllen:

$$0{,}32 \leq 1000 \times D_S \times D_L{}^3 \times (C/100)^4/L^3 \leq 1{,}22 \qquad (1),$$

wobei Ds, $D_L$ und L gemäß der Beschreibung bestimmt werden.

2. Glasfaserverstärkte Harzplatte gemäß Anspruch 1, die Glasfasern umfasst, bei denen die Nebenachse Ds in einem Bereich von 4,8 bis 11,5 $\mu$m liegt, die Hauptachse $D_L$ in einem Bereich von 29,0 bis 48,0 $\mu$m liegt und die zahlenmittlere Faserlänge L in einem Bereich von 150 bis 390 $\mu$m liegt, wobei
der Glasfasergehalt C in einem Bereich von 30,0 bis 50,0 Massen-% liegt und Ds, $D_L$, L und C die folgende Formel (2) erfüllen:

$$0{,}32 \leq 1000 \times D_S \times D_L^3 \times (C / 100)^4 / L^3 \leq 0{,}94 \qquad (2).$$

3.  Glasfaserverstärkte Harzplatte gemäß Anspruch 1 oder Anspruch 2, die Glasfasern umfasst, bei denen die Nebenachse Ds in einem Bereich von 5,0 bis 11,0 $\mu$m liegt, die Hauptachse $D_L$ in einem Bereich von 30,0 bis 44,0 $\mu$m liegt und die zahlenmittlere Faserlänge L in einem Bereich von 170 bis 380 $\mu$m liegt, wobei der Glasfasergehalt C in einem Bereich von 35,0 bis 47,5 Massen-% liegt und Ds, $D_L$, L und C die folgende Formel (3) erfüllen:

$$0{,}32 \leq 1000 \times D_S \times D_L^3 \times (C / 100)^4 / L^3 \leq 0{,}70 \qquad (3).$$

4.  Glasfaserverstärkte Harzplatte gemäß einem der Ansprüche 1 bis 3, die Glasfasern umfasst, bei denen die Nebenachse Ds in einem Bereich von 5,0 bis 6,5 $\mu$m liegt, die Hauptachse $D_L$ in einem Bereich von 30,0 bis 36,0 $\mu$m liegt und die zahlenmittlere Faserlänge L in einem Bereich von 180 bis 290 $\mu$m liegt, wobei der Glasfasergehalt C in einem Bereich von 40,0 bis 45,0 Massen-% liegt und Ds, $D_L$, L und C die folgende Formel (4) erfüllen:

$$0{,}32 \leq 1000 \times D_S \times D_L^3 \times (C / 100)^4 / L^3 \leq 0{,}52 \qquad (4).$$

5.  Glasfaserverstärkte Harzplatte gemäß einem der Ansprüche 1 bis 4, wobei das amorphe thermoplastische Harz Polycarbonat ist.

**Revendications**

1.  Plaque de résine renforcée par des fibres de verre ayant une épaisseur inférieure ou égale à 0,5 mm, comprenant :

    une fibre de verre dont la section transversale est plate, avec un axe mineur Ds compris entre 4,5 et 12,0 $\mu$m, et un axe principal $D_L$ compris entre 20,0 et 50,0 $\mu$m ; et
    une résine thermoplastique amorphe, dans laquelle
    la longueur moyenne en nombre L de la fibre de verre est comprise entre 50 et 400 $\mu$m, la teneur en fibre de verre C est comprise entre 25,0 et 55,0 % en masse, et $D_S$, $D_L$, L et C satisfont à la formule suivante (1) :

$$0{,}32 \leq 1000 \times D_S \times D_L^3 \times (C/100)^4/L^3 \leq 1{,}22 \ldots (1),$$

    dans laquelle Ds , $D_L$, et L sont déterminés conformément à la description.

2.  Plaque de résine renforcée par des fibres de verre selon la revendication 1, comprenant des fibres de verre dont l'axe mineur Ds est compris entre 4,8 et 11,5 $\mu$m, l'axe majeur $D_L$ est compris entre 29,0 et 48,0 $\mu$m, et la longueur moyenne en nombre des fibres L est comprise entre 150 et 390 $\mu$m, dans laquelle la teneur en fibres de verre C est comprise entre 30,0 et 50,0 % en masse, et les $D_S$, $D_L$, L et C satisfont à la formule suivante (2) :

$$0{,}32 \leq 1000 \times D_S \times D_L^3 \times (C/100)^4/L^3 \leq 0{,}94 \ldots (2).$$

3.  Plaque de résine renforcée par des fibres de verre selon la revendication 1 ou la revendication 2, comprenant des fibres de verre dont l'axe mineur Ds est compris entre 5,0 et 11,0 $\mu$m, l'axe majeur $D_L$ est compris entre 30,0 et 44,0 $\mu$m, et la longueur moyenne en nombre des fibres L est comprise entre 170 et 380 $\mu$m, selon que la teneur en fibres de verre C est comprise entre 35,0 et 47,5 % en masse, et les $D_S$, $D_L$, L et C satisfont à la formule suivante (3) :

$$0{,}32 \leq 1000 \times D_S \times D_L^3 \times (C/100)^4/L^3 \leq 0{,}70 \ldots (3).$$

4.  Plaque de résine renforcée par des fibres de verre selon l'une quelconque des revendications 1 à 3, comprenant une fibre de verre dont l'axe mineur Ds est compris entre 5,0 et 6,5 $\mu$m, l'axe majeur $D_L$ est compris entre 30,0 et

36,0 $\mu$m, et la longueur moyenne en nombre des fibres L est comprise entre 180 et 290 $\mu$m, dans laquelle la teneur en fibres de verre C est comprise entre 40,0 et 45,0 % en masse, et les $D_S$, $D_L$, L et C satisfont à la formule suivante (4) :

$$0,32 \leq 1000 \times D_S \times D_L^3 \times (C/100)^4/L^3 \leq 0,52 \ ... \ (4).$$

5. Plaque de résine renforcée par des fibres de verre selon l'une quelconque des revendications 1 à 4, dans laquelle la résine thermoplastique amorphe est le polycarbonate.

**REFERENCES CITED IN THE DESCRIPTION**

**Patent documents cited in the description**

- JP 2014040555 A

- WO 2020137004 A1